# EUROPEAN PATENT APPLICATION

(11) **EP 4 059 582 A1**
(43) Date of publication of application: **21.09.2022**
(21) Application number: 21162884.7
(22) Date of filing: 16.03.2021
(51) Int. Cl.: A63F 13/26, A63F 13/211, A63F 13/235, A63F 13/24, A63F 13/92

(54) **MOBILE HANDHELD GAMING CONTROLLER**

(71) Applicant: UDU ApS, 1956 Frederiksberg C (DK)
(72) Inventor: Christensen, Asbjørn, Høj, 1956 Frederiksberg C (DK); LARSEN, Marius, Helmer, 1956 Frederiksberg C (DK)
(74) Representative: Birkeland, Morten

(57) **Abstract**

The present invention relates to a mobile handheld gaming controller (1) having a handle-like 3-dimensional shape suitable for gripping by a human hand, said gaming controller being connectable to at least one mobile communication device (13), wherein the gaming controller (1) comprises a housing (2) enclosing electronic circuitry comprising (i) a circuit board (8), (ii) a power supply (11) optionally mounted on the circuit board, (iii) a motion sensor optionally mounted on the circuit board, (iv) a data processing unit optionally mounted on the circuit board, (v) a data storage unit optionally mounted on the circuit board, (vi) a wireless communication unit optionally mounted on the circuit board, and (vi) a haptic signal generator (9), characterized in that and the gaming controller (1) further comprises a display unit (6) having a visible area of less than 1000 mm2 and connects wirelessly with the mobile communication device (13)

## Description

### Field of the Invention

The present invention relates to a mobile handheld gaming controller for games providing instructions and/or feed back to a gamer and/or between multiple gamers when executing a game.

### Background of the invention

Handheld controllers for controlling TV games are known in the art. For example US2007/0066394 (Nintendo) describes a handheld controller with control buttons, motions detector and haptic signal generator, which during a game interacts with a stationary game console staticly linked to the domestic powergrid and connected to a monitor, typically a TV screen. Modern smart devices such as smartphones, smart watched or tablets could, given appropriate software, also be a handheld gaming controller as most contain.

However, prior art handheld gaming controllers are not mobile nor suited for physically active all-weather outdoor games, such as role-playing games and are too fragile and/or contain too sensitive excess electronics for this purpose and therefore a need is identified for providing improved gaming controllers for this purpose.

### Summary of the Invention

The gaming controller of the present invention offers the improvement, advantages and/or advancements over the background art in that it can be used for active outdoors games, such as role-playing games, with any number of gamers which can be separated by long distances - even in separate countries or continents. The gaming controller is ergonomical and allows for a tight grip by humand hand(s) and it is sturdy and robust to wear and tear as it is shock resistant, dirt and water reistant and free of excess sensitive electronic circuitry which can break down during operation and consumes unnecessary power. Further, due to the physical separation of the gaming controller of the invention from its mobile communication device counterpart games can be execute solely through a gamers interactions and reaction to the gaming controllers position, control units, display, light and haptic signals allowing for an intense gaming experience and for a strong sensory focus on the gaming environment, such as the physical surroundings.

Accordingly, in a first aspect the invention provides a mobile handheld gaming controller (1) having a handle-like 3-dimensional shape suitable for gripping by a human hand, said gaming controller being connectable to at least one mobile communication device (13), wherein the gaming controller (1) comprises a housing (2) enclosing electronic circuitry comprising (i) a circuit board (8), (ii) a power supply (11) optionally mounted on the circuit board, (iii) a motion sensor optionally mounted on the circuit board, (iv) a data processing unit optionally mounted on the circuit board, (v) a data storage unit optionally mounted on the circuit board, (vi) a wireless communication unit optionally mounted on the circuit board, and (vi) a haptic signal generator (9), characterized in that and the gaming controller (1) further comprises a display unit (6) having a visible area of less than 1000 mm2 and connects wirelessly with the mobile communication device (13).

In a further aspect, the invention provides a gaming assembly (14) comprising the gaming controller (1) of the invention and a mobile communication device (13), wherein the gaming controller (1) and the mobile communication device (13) are separate entities in proximity of less than 100 meters; and wherein the mobile communication device (13) is capable of receiving, processing and transmitting data to and from the gaming controller and to receiving and transmitting data to additional data processing devices via long range WiFi or cellular network and/or mobile network; and wherein optionally the mobile communication device (13) is a smartphone, tablet computer, or smart watch.

In a still further aspect, the invention provides a computer-implemented method of providing sensory signals to a human gamer comprising:
a) providing one or more gaming assemblies (14) of the invention;
b) Providing a movement or change of orientation or actuation of a control unit (12) of the gaming controller (1) generating a first set of data in the motion sensor;
c) transmitting the first set of data to the data processing unit in the gaming controller (1) and processing said data into a second set of data (16A) under the control of a first game software running on the gaming controller (1);
d) transmitting the second set of data (16A) from the data processing unit in the gaming controller (1) wirelessly to the mobile communication device (13) and processing the second set of data (16A) in the mobile communication device (13) to generate a third set of data under the control of a second game software running on the mobile communication device (13);
and comprising one or more of the following processes:
e) transmitting the third set of data (16B) from the mobile communication device (13), optionally via the data processing unit and/or the data storage unit, back to the display (6), the light source (10) and/or haptic signal generator (9) in the gaming controller (1) to produce a sensory impulse; and/or
f) transmitting the third set of data (16C) from the mobile communication device (13) wirelessly to a server unit (15) and processing said data into a fourth set of data under the control of a game software running on the server and transmitting the fourth data (16 E-H) set to further gaming assemblies, optionally triggering further data transmissions (16 I-L) between the gaming controllers (1) and mobile communication devices (13) of the further gaming assemblies and producing sensory impulses in the displays (6), the light sources (10) and/or haptic signal generators (9) in the further gaming controllers (1).

In a still further aspect, the invention provides a gaming software running on the gaming controller (1) and/or the mobile communication device (13) in the gaming assembly of the invention or the server (15) of the invention producing a data signal which generates a sensory impulse/signal in the display (6), the light source (10) and/or the haptic impulse/signal generator (9) in the gaming controller (1).

### Description of drawings and figures

The features and advantages of the present invention is readily apparent to those skilled in the art by the below detailed description of embodiments and examples of the invention with reference to the figures and drawings included herein where:

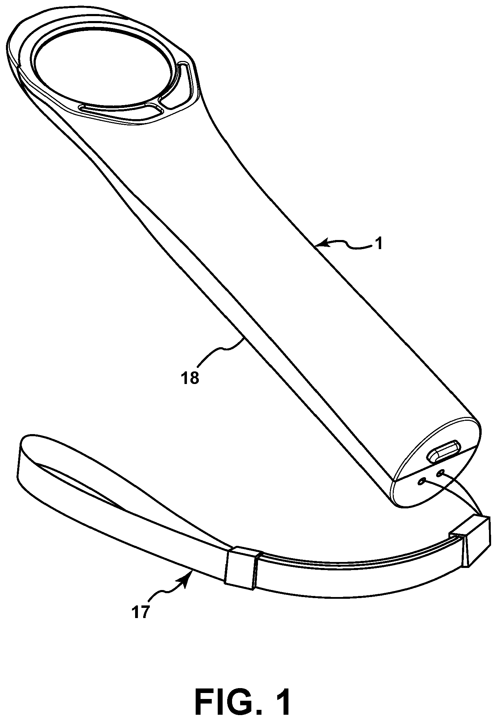

Figure 1 schematically illustrates a working example of an outer design of a gaming controller (1) of the invention.

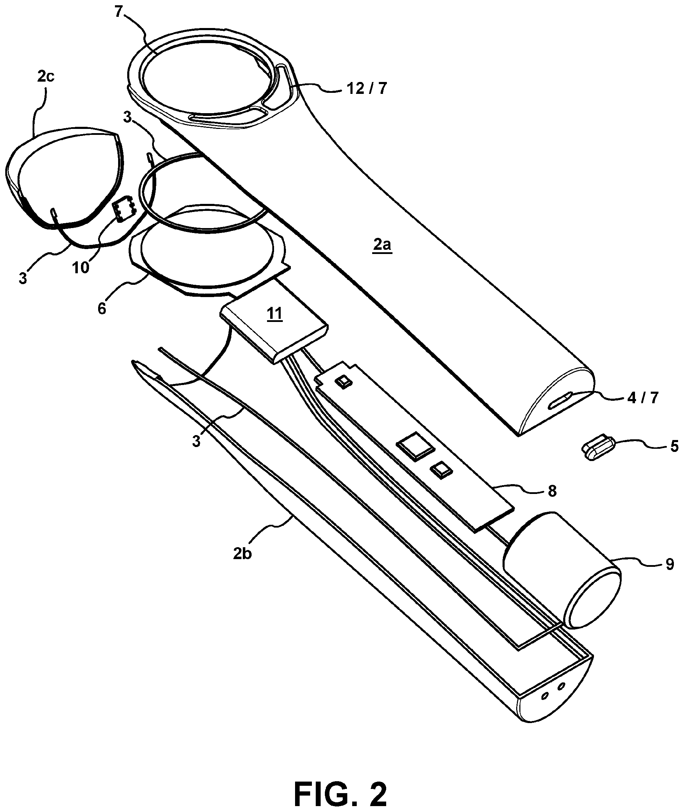

Figure 2 schematically illustrates a working example of inner and outer components of the gaming controller (1) of the invention.

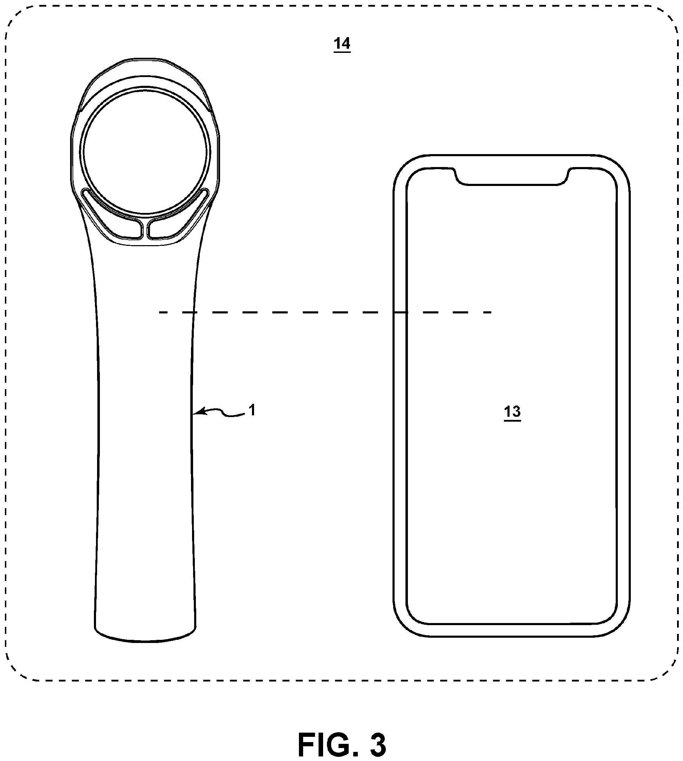

Figure 3 schematically illustrates a working example of a gaming assembly of the invention comprising the gamining controller (1) and the mobile communication device (13).

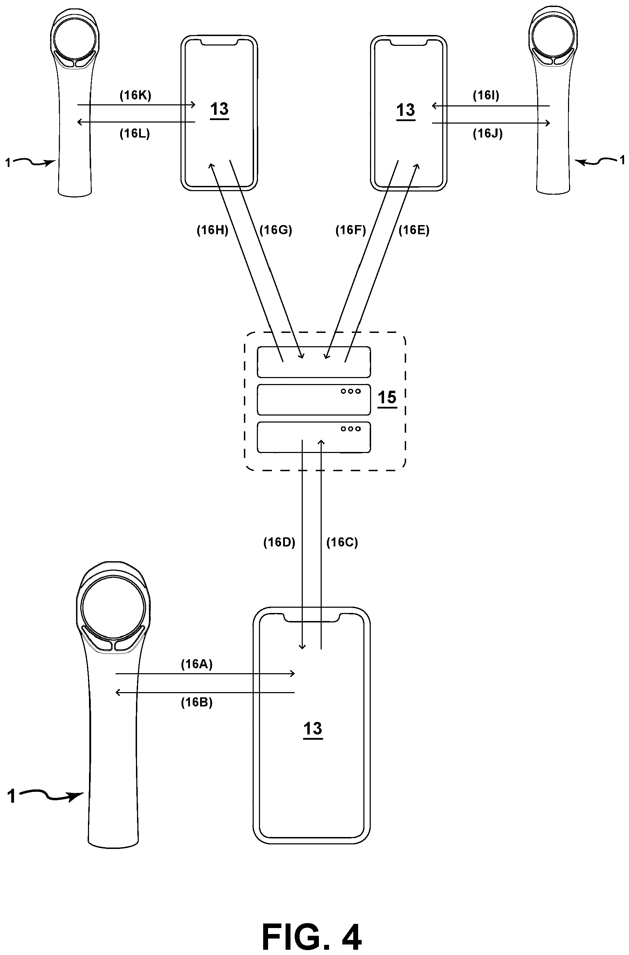

Figure 4 schematically illustrates a working example of the setup of multiple gaming assemblies (14) interconnected by a game server (15) to execute the software of the invention and the computer implemented method of the invention, allowing for signal transmissions (16A-L) and transaction between the gaming controllers (1) and for generation of sensory impulses/signals in the gaming controllers (1) under the control of gaming software running on the gaming controllers (1), the mobile communication devices (13) or the game server (15).

### Incorporation by reference

All publications, patents, and patent applications that may be referred to herein are incorporated by reference to the same extent as if each individual publication, patent, or patent application was specifically and individually indicated to be incorporated by reference. In the event of a conflict between a term herein and a term in an incorporated reference, the term herein prevails and controls.

### Detailed description of the invention

The figures included herein are illustrative and simplified for clarity, and they merely show details which are essential to the understanding of the invention, while other details may have been left out. Throughout the specification, claims and drawings the same reference numerals are used for identical or corresponding parts. It is to be noted that the wording "first" and "second" are used for separating elements of similar function. Thus, a "second" element does not necessarily require the presence of a "first" element.

In the first aspect the invention provides a mobile handheld gaming controller (1) having a handle-like 3-dimensional shape suitable for gripping by a human hand, said gaming controller being connectable to at least one mobile communication device (13), wherein the gaming controller (1) comprises a housing (2) enclosing electronic circuitry comprising (i) a circuit board (8), (ii) a power supply (11) optionally mounted on the circuit board, (iii) a motion sensor optionally mounted on the circuit board, (iv) a data processing unit optionally mounted on the circuit board, (v) a data storage unit optionally mounted on the circuit board, (vi) a wireless communication unit optionally mounted on the circuit board, and (vi) a haptic signal generator (9), characterized in that and the gaming controller (1) further comprises a display unit (6) having a visible area of less than 1000 mm2 and connects wirelessly with the mobile communication device (13)

While the gaming controller in use is connected to mobile communication device, such as a smartphone, the gaming controller of the invention allows gamers to engage in a game without looking or touching the mobile communication device, which can be tucked away in a dry safe place such as a pocket or bag.

The gaming controller preferably further comprises one or more control units (12),
a light source (10), a connector for charging the power supply and/or a strap for attaching the gaming controller to the wrist of a gamer.

The housing (2) preferably has a symmetrical 3-dimensional shape providing for equal grip by both right and left hand. In one embodiment the housing (2) comprise an upper control surface and a lower surface, wherein the lower surface being curved, the digits of a gamer, in use, curls around the curved lower surface to allow the gamer to firmly grasp and hold the housing (2) and control the orientation thereof, in use, the gamer's thumb digit extending in a suspended manner over the upper control surface, the housings curved lower surface optionally defining a depression therein positioned and dimensioned so as to accept a gamers digit, optionally the gamers trigger finger; wherein the upper control surface comprise the display unit (6) and wherein said housing can sense, at least in part, its own orientation. In further embodiments at least one control unit (12) is disposed on the upper control surface of the housing (2), enabling a gamer's thumb, in use, to be suspended at least in part over and able to descend down onto the control unit (12) so as to actuate and operate said control unit (12) while the gamer maintains a grip on the housing (2). In an additional embodiment at least one control unit (12) is disposed at least in part within said housing curved lower surface depression, enabling a gamer, in use, to selectively actuate said control unit with a digit, optionally the gamers trigger finger. In an attractive embodiment the housing is shaped so that the gaming controller can be operated simultaneously by two hands.

The housing (2) may comprise one or more shell elements (2a, 2b, 2c), comprising one or more apertures (7) fitted for mounting the display and optionally the control units (12), said shell elements fitted together to form a container containing the electronic circuitry. More specifically the housing (2) may comprise a first upper shell element (2a), a second lower shell element (2b) fitted to tightly connect with the upper shell element (2a), and optionally a third lateral shell element (2c) fitted to tightly connect with the upper shell (2a) and optionally the lower shell (2b) and wherein, optionally one shell comprises an outer depression or aperture (4) for containing i) the connector for charging the power supply or ii) a replaceable power supply both i) and ii) covered by a detachable lid (5).

The housing (2) of the invention is a containiner containing electronic circuitry of the gaming controller and as such the housing (2) is preferably resistant to penetration of water and dirt, optionally water and dirt proof. The housing (2) may be fitted with one or more sealing elements (3) in between connections of shells (2a, 2b, 2c) and/or apertures (7) connecting the inside of the housing to the outside of the housing. Such sealing elementmay be a gasket, made from an elastic synthetic or natural polymeric material resistant to water and dirt penetration.

The housing (2) is suitably made from a material comprising a synthetic or natural polymers, metal alloys or a composite thereof. Synthetic polymers include but are not limited to thermoplastic, and/or a thermosetting plastic materials, such as thermoplastic elastomers. Natural polymers include wood. Suitable metal alloys include aluminium and/or steel alloys.

In some embodiments the upper shell (2a) can be made of a transparent material. In other embodiments at least one shell has an orange signal color, enabling improved visual detection should the controller be dropped or lost during a game.

The housing (2) preferably comprise a gripping portion (18) has an outer diameter/diagonal of between 2 cm to 10 cm, such as between 2 to 7 cm, such as 2 to 5 cm and an outer length between 10 to 30 cm, such as between 13 cm to 25 cmm such as between 13 to 20 cm. These dimensions provide god gripping properties as well as a good balance of the controller. The inner diameter/diagonal of the housing (2) is suitably between below 2 cm to below 10 cm, such as between below 2 to below 7 cm, such as below 2 to below 5 cm and an inner length of between below 10 to below 30 cm, such as between below 13 cm to below 25 cm such as between below 13 to below 20 cm.

The circuit board of the invention is preferably a printed circuit board (PCB) of commercial grade.

The power supply (11) of the invention is suitably a fixed rechargeable battery, such as a Li-ion battery or LiPo battery or Nickel-Cadmium battery or Nickel Metal Hydride or a replaceable battery, such as an AA size or AAA size battery.

The data processing unit, CPU, is suitably a microprocessor or a microcontroller or an embedded processor or a Digital Signal Processor or a Media Processor. Forther data processing unit which preferably can be employed is graphics buffer unit. The graphics buffer is a chip/circuit which store graphics data to be played back on the display. When a particular graphics is to be displayed, the data processing unit on the mobile communication device (13) sends data code to the gaming controller, instructing which graphics to retrieve from the graphics buffer and display.

The data storage unit in the gaming controller of the invention, can be any suitable commercially available data storage unit, such as an embedded MultiMediaCard (eMMC) or a Random Access Memory chip (RAM) or an On Chip Memory (RAM).

The wireless communication unit in the gaming controller of the invention suitably comprise a Bluetooth or radio wave transmitter and receiver or a combination thereof. In one embodiment the wireless communication unit is a Bluetooth Low Energy (BLE) radio transmitter and receiver. The wireless communication unit may also comprise a Near Field Communication module.

The display in the gaming controller of the invention can in some embodiments have a visible area of up to 10000 mm², such as up to 7500 mm², such as up to 5000 mm², such as up to 2500 mm², such as up to 1000 mm², such as up to 700 mm², such as between 500 mm² to 1000 mm². The display may preverably be rectangular, circular or ellipsoid or a combination thereof. In some embodiments the display is rectangular and has a dimension between 10-100 mm x 10-100 mm, such as between 10-75 mm x 10- 75 mm, such as 10-50 x 10-50 mm, such as 15-40 x 15-40 mm, such 20-30 mm x 20-30 mm. In some embodiments the display is circular or ellipsoid and has a longest diameter of between 10-100 mm, such as between 10-75 mm, such as between 10-50 mm, such as between 15-40 mm such as between 20-30 mm. The display of the invention is preferably a LCD/TFT, LED or OLED display, in some embodiments a touch sensitive display and in other embodiments not a touch sensitive display. The latter is particularly relevant for games where unintended or accidental pressures of the display may occur.

The motion sensor of the invention is suitably an Inertia Measuring Unit (IMU) comprising one or more accelerometers, gyroscopes and/or magnetometers. In a particular embodiment the motion sensor comprises an accelerometer, a gyroscope and a magnetometer, separately or together and optionally on one chip. The accelerometer amy suitably be a 3-axis accelerometer, while the gyroscope may be a 3-axis gyroscope and the the magnetometer may be a 3-axis magnetometer. In some embodiment that ganming controller of the invention may also contains a barometer unit, which can inter alia, may provide data about the gaming controllers vertical orientation or movements.

The haptic impulse/signal generator (9) of the invention is suitably a vibration generator, optionally selected from voice coil actuators, eccentric rotating mass actuators, linear resonance actuators, surface transducer actuators, solenoid actuators and/or accelerated ram actuators. In this contaxt haptic may also include cutaneous sensing, such as hot or cold temperatures.

The control units (12) may suitably comprise single touch buttons, multiple buttons, capacitive touch buttons, full-hand squeeze buttons, joystick buttons and/or depressible buttons. In some embodiments the depressible button comprises a cross switch, a push button or a wedge shaped spring loaded button. The surface of the one or more control units (12) are preferable made in a material which provides good traction, in use, between the buttonmaterial and the skin of a gamer. Such materials include elastic natural or synthetic polymers.

The light source (10) suitably emits visible light outside of the housing (1), and said light source can be a LED or a RGB LED capable of emitting multiple colors of visible light.

The strap of the invention is suitably a wrist strap made from woven or braided flexible synthetic of natural fibers and optionally comprises a buckle for lengths adjustment and/or a mechanism that allows for attachment/detachment of the strap from the gaming controller (1).

The connector for charging the power supply (11) is suitably a USB-C, Micro-USB port or an inductive charging connector.

The gaming controller of the invention is for increased robustness and stability in use free of excess sensitive electronic circuitry which can break down during operation and consumes unnecessary power. Accordingly, in a special embodiment the electronic circuitry of the gaming controller of the invention does not contain speakers, SIM card ports, cameras, GPS transmitters or wireless transmitters/receivers for long distance communications, such as via cellular networks and/or mobile networks. In some embodiments the display (6) of the gaming controller (1) is not a pressure sensitive (touch) display.

In a separate aspect, the invention also provides a gaming assembly (14) comprising the gaming controller (1) and the mobile communication device (13) of the invention, wherein the gaming controller (1) and the mobile communication device (13) are separate entities in proximity of less than 100 meters which is the maximal distance for most current Bluetooth communication units, such as less than 75 meters, such as less than 50 meter,m such as less than 25 meters, such as less than 10 meters, such as 5 meters or less. The mobile communication device (13) is capable of receiving, processing and transmitting data to and from the gaming controller and of receiving, processing and transmitting data to an additional data processing device, such as a game server (15) via long distance communications such as WiFi or cellular networks and/or mobile networks. The mobile communication device (13) is preferably a smartphone, a laptop, a tablet computer or a smart watch.

In a further separate aspect, the invention also provides a computer-implemented method of providing sensory impulses/signals to a human gamer. In the context of this invention sensory is to be understood as visual, haptic or cutaneus impulses/signals. The method comprises the steps of:
a) providing one or more gaming assemblies (14) of claim 13;
b) Providing a movement or change of orientation or actuation of a control unit (12) of the gaming controller (1) generating a first set of data in the motion sensor;
c) transmitting the first set of data to the data processing unit in the gaming controller (1) and processing said data into a second set of data (16A) under the control of a first game software running on the gaming controller (1);
d) transmitting the second set of data (16A) from the data processing unit in the gaming controller (1) wirelessly to the mobile communication device (13) and processing the second set of data (16A) in the mobile communication device (13) to generate a third set of data under the control of a second game software running on the mobile communication device (13);
and further comprises one or more of the further steps:
e) transmitting the third set of data (16B) from the mobile communication device (13), optionally via the data processing unit and/or the data storage unit, back to the display (6), the light source (10) and/or haptic signal generator (9) in the gaming controller (1) to produce a sensory impulse; and/or
f) transmitting the third set of data (16C) from the mobile communication device (13) wirelessly to a server unit (15) and processing said data into a fourth set of data under the control of a game software running on the server and transmitting the fourth data (16 E-H) set to further gaming assemblies, optionally triggering further data transmissions (16 I-L) between the gaming controllers (1) and mobile communication devices (13) of the further gaming assemblies and producing sensory impulses in the displays (6), the light sources (10) and/or haptic signal generators (9) in the further gaming controllers (1).

The first, second and third program codes (game softwares) may be the same or different.

In a further separate aspect, the invention also provides a computer program (gaming software) running on the gaming controller (1), the mobile communication device (13) and/or the server (15) of the invention producing a data signal which generates a sensory impulse/signal in the display (6), the light source (10) and/or the haptic impulse/signal generator (9) in the gaming controller (1).

### References

- 1: Gaming controller
- 2: Housing and housing shells
- 3: Sealing/gasket
- 4: Aperture or depression for external battery charge connector or for replacable batteries
- 5: Lid
- 6: Display
- 7: Aperture(s) for display and control units
- 8: Circuit board
- 9: Haptic impulse/signal generator
- 10: Light source
- 11: Power supply
- 12: Control unit(s)
- 13: Mobile communication device
- 14: Gaming assembly
- 15: Gaming server
- 16: Wireless data transmissions
- 17: Strap
- 18: Gripping portion

### Items of the invention

1. A mobile handheld gaming controller (1) having a handle-like 3-dimensional shape suitable for gripping by a human hand, said gaming controller being connectable to at least one mobile communication device (13), wherein the gaming controller (1) comprises a housing (2) enclosing electronic circuitry comprising (i) a circuit board (8), (ii) a power supply (11) optionally mounted on the circuit board, (iii) a motion sensor optionally mounted on the circuit board, (iv) a data processing unit optionally mounted on the circuit board, (v) a data storage unit optionally mounted on the circuit board, (vi) a wireless communication unit optionally mounted on the circuit board, and (vi) a haptic signal generator (9), characterized in that and the gaming controller (1) further comprises a display unit (6) having a visible area of less than 1000 mm2 and connects wirelessly with the mobile communication device (13).
2. The gaming controller of item 1, further comprising one or more control units (12).
3. The gaming controller of any preceding item, further comprising a light source (10).
4. The gaming controller of any preceding item, further comprising a strap (17) for attaching the gaming controller to the hand of a gamer.
5. The gaming controller of any preceding item, further comprising a connector for charging the power supply.
6. The gaming controller of any preceding item, wherein the housing (2) has a symmetrical 3-dimensional shape providing for equal grip by both right and left hand.
7. The gaming controller of any preceding item, wherein the housing (2) comprises an upper control surface and a lower surface, wherein the lower surface being curved, in use the digits of a gamer curls around the curved lower surface to allow the gamer to firmly grasp and hold the housing (2) and control the orientation thereof, in use, the gamer's thumb digit extending in a suspended manner over the upper control surface, the housing curved lower surface optionally defining a depression therein positioned and dimensioned so as to accept a gamer digit, optionally the gamers trigger finger; wherein the upper control surface comprise the display unit (6) and wherein said housing can sense, at least in part, its own orientation.
8. The gaming controller of item 2, wherein at least one control unit (12) is disposed on the upper control surface, enabling a gamer's thumb, in use, to be suspended at least in part over and able to descend down onto the control unit (12) so as to actuate and operate said control unit (12) while the gamer maintains a grip on the housing (2).
9. The gaming controller of item 2 or 8, wherein at least one control unit (12) is disposed at least in part within said housing curved lower surface depression, enabling a gamer, in use, to selectively actuate said control unit with a digit, optionally the gamers trigger finger.
10.The gaming controller of any preceding item, wherein the gaming controller can be operated simultaneously by two hands.
11.The gaming controller of any preceding item, wherein the housing (2) comprises one or more shell elements (2a, 2b, 2c), comprising one or more apertures (7) fitted for mounting the display and optionally the control units (12), said shell elements fitted together to form a container containing the electronic circuitry.
12.The gaming controller of item 11, wherein the housing (2) comprises a first upper shell element (2a), a second lower shell element (2b) fitted to tightly connect with the upper shell element (2a), and optionally a third lateral shell element (2c) fitted to tightly connect with the upper shell (2a) and optionally the lower shell (2b) and wherein, optionally one shell comprises an outer depression or aperture (4) for containing i) the connector for charging the power supply or ii) a replaceable power supply both i) and ii) covered by a detachable lid (5).
13.The gaming controller of any preceding item, wherein the housing is resistant to water and dirt and is fitted with one or more sealing elements (3) in between connections of shells (2a, 2b, 2c) and/or apertures (7) connecting the inside of the housing to the outside of the housing.
14.The gaming controller of item 13, wherein the sealing element is a gasket.
15.The gaming controller of items 13 to 14, wherein the housing is water and dust proof.
16.The gaming controller of any preceding item, wherein the housing (2) is made from a material comprising a synthetic or natural polymer, metal alloy or a composite thereof.
17.The gaming controller of item 16, wherein the synthetic polymer is a thermoplastic, and/or a thermosetting plastic material, such as a thermoplastic elastomer.
18.The gaming controller of item 16, wherein the metal alloy is an aluminium or steel alloy.
19.The gaming controller of item 16, wherein the housing is made from wood.
20.The gaming controller of item 12, wherein the upper shell (2a) is transparent.
21.The gaming controller of item 12, wherein at least one shell has an orange signal color
22.The gaming controller of any preceding item, wherein the housing (2) has a gripping portion (18) having an outer diameter/diagonal between 2 cm to 5 cm and a length between 13 cm to 20 cm.
23.The gaming controller of any preceding item, wherein the housing (2) has an inner diameter/diagonal between 1 cm to 5 cm and a length between 13 to 19 cm.
24.The gaming controller of any preceding item, wherein the circuit board is a printed circuit board (PCB).
25.The gaming controller of any preceding item, wherein the power supply (11) is a fixed rechargeable battery, such as a Li-ion battery or LiPo battery or Nickel-Cadmium battery or Nickel Metal Hydride or a replaceable battery, such as an AA size or AAA size battery.
26.The gaming controller of any preceding item, wherein the data processing unit, is a microprocessor or a microcontroller or an embedded processor or a Digital Signal Processor or a Media Processor.
27. The gaming controller of any preceding item, wherein the electronic circuitry further comprises a graphics buffer unit.
28.The gaming controller of any preceding item, wherein the data storage unit is an embedded MultiMediaCard (eMMC) or an On Chip Memory (RAM).
29.The gaming controller of any preceding item, wherein the wireless communication unit comprise a Bluetooth or radio wave transmitter and receiver or a combination thereof, optionally a Bluetooth Low Energy (BLE) radio transmitter and receiver.
30.The gaming controller of item 29, wherein the wireless communication unit further comprise a Near Field Communication module.
31.The gaming controller of any preceding item, wherein the visible area of the display is between 500 mm2 to 1000 mm2
32.The gaming controller of item 31, wherein the display is rectangular, circular or ellipsoid or a combination thereof.
33.The gaming controller of item 32, wherein the rectangular display has a dimension between 20-30 mm x 20-30 mm.
34.The gaming controller of item 32, wherein the circular or ellipsoid display has a longest diameter of between 15mm to 30mm.
35.The gaming controller of items 31 to 34, wherein the display is a LCD/TFT, LED or OLED display.
36.The gaming controller of item 31 to 35, wherein the display is a pressure sensitive touch display.
37.The gaming controller of any preceding item, wherein the motion sensor is an Inertia Measuring Unit (IMU) comprising one or more accelerometers, gyroscopes and/or magnetometers.
38.The gaming controller of item 37, wherein the IMU comprises an accelerometer, a gyroscope and a magnetometer, separately or together on one chip.
39.The gaming controller of item 37 or 38, wherein the accelerometer is a 3-axis accelerometer.
40.The gaming controller of item 37 or 38, wherein the gyroscope is a 3-axis gyroscope.
41.The gaming controller of item 37 or 38, wherein the magnetometer is a 3-axis magnetometer.
42.The gaming controller of any preceding item, wherein the haptic signal generator is a vibration generator, optionally selected from voice coil actuators, eccentric rotating mass actuators, linear resonance actuators, surface transducer actuators, solenoid actuators and/or accelerated ram actuators.
43.The gaming controller of item 2, wherein the one or more control units (12) comprise a single touch button.
44.The gaming controller of item 43, wherein the one or more control units (12) comprise a multiple button.
45.The gaming controller of item 43, wherein the one or more control units (12) comprise a capacitive touch button.
46.The gaming controller of item 43, wherein the one or more control units (12) comprise a full-hand squeeze button.
47.The gaming controller of item 43, wherein the one or more control units (12) comprise a joystick button.
48.The gaming controller of item 43, wherein the one or more control units (12) is a depressible button.
49.The gaming controller of item 48, wherein the depressible button comprises a cross switch, a push button or a wedge shaped spring loaded button.
50.The gaming controller of item 43 to 49, wherein the surface of the one or more control units (12) are made from an elastic natural or synthetic polymer.
51.The gaming controller of item 3, wherein the light source (10) emits visible light outside of the housing (1).
52.The gaming controller of item 51, wherein the light source (10) comprises a LED, a RGB LED capable of emitting multiple colors of visible light.
53.The gaming controller of item 4, wherein the strap (17) is a wrist strap made from woven or braided flexible synthetic of natural fibers and optionally comprises a buckle for lengths adjustment and/or a mechanism that allows for attachment/detachment of the strap from the gaming controller.
54.The gaming controller of item 5, wherein the connector for charging the power supply is a USB-C, Micro-USB port or an inductive charging connector.
55.The gaming controller of any preceding item, wherein electronic circuitry does not contain a speaker, a SIM card port, a camera, a GPS transmitter or a long-range wireless transmitter/receiver for cellular networks and/or mobile networks.
56.A gaming assembly (14) comprising the gaming controller (1) of any preceding items and a mobile communication device (13), wherein the gaming controller (1) and the mobile communication device (13) are separate entities in proximity of less than 100 meters.
57. The gaming assembly of item 56, wherein the mobile communication device (13) is capable of receiving, processing and transmitting data to and from the gaming controller and to receiving and transmitting data to additional data processing devices via long range WiFi or cellular networks and/or mobile networks.
58. The gaming assembly of items 56 or 57, wherein the mobile communication device (13) is a smartphone, laptop, tablet computer or smart watch.
59. A computer-implemented method of providing sensory signals to a human gamer comprising
   a) Providing one or more gaming assemblies (14) of items 56 to 58;
   b) Providing a movement or change of orientation or actuation of a control unit (12) of the gaming controller (1) generating a first set of data in the motion sensor;
   c) Transmitting the first set of data to the data processing unit in the gaming controller (1) and processing said data into a second set of data (16A) under the control of a first game software running on the gaming controller (1);
   d) Transmitting the second set of data (16A) from the data processing unit in the gaming controller (1) wirelessly to the mobile communication device (13) and processing the second set of data (16A) in the mobile communication device (13) to generate a third set of data under the control of a second game software running on the mobile communication device (13);
   and comprising one or more of the following processes:
   e) Transmitting the third set of data (16B) from the mobile communication device (13), optionally via the data processing unit and/or the data storage unit, back to the display (6), the light source (10) and/or haptic signal generator (9) in the gaming controller (1) to produce a sensory impulse; and/or
   f) Transmitting the third set of data (16C) from the mobile communication device (13) wirelessly to a server unit (15) and processing said data into a fourth set of data under the control of a game software running on the server and transmitting the fourth data (16 E-H) set to further gaming assemblies, optionally triggering further data transmissions (16 I-L) between the gaming controllers (1) and mobile communication devices (13) of the further gaming assemblies and producing sensory impulses in the displays (6), the light sources (10) and/or haptic signal generators (9) in the further gaming controllers (1).
60. A gaming software running on the gaming controller (1) and/or the mobile communication device (13) in the gaming assembly of items 56 to 58 or the server (15) of item 59 producing a data signal which generates a sensory impulse/signal in the display (6), the light source (10) and/or the haptic impulse/signal generator (9) in the gaming controller (1).

## Claims

1. A mobile handheld gaming controller (1) having a handle-like 3-dimensional shape suitable for gripping by a human hand, said gaming controller being connectable to at least one mobile communication device (13), wherein the gaming controller (1) comprises a housing (2) enclosing electronic circuitry comprising (i) a circuit board (8), (ii) a power supply (11) optionally mounted on the circuit board, (iii) a motion sensor optionally mounted on the circuit board, (iv) a data processing unit optionally mounted on the circuit board, (v) a data storage unit optionally mounted on the circuit board, (vi) a wireless communication unit optionally mounted on the circuit board, and (vi) a haptic signal generator (9), **characterized in that** and the gaming controller (1) further comprises a display unit (6) having a visible area of less than 1000 mm2 and connects wirelessly with the mobile communication device (13)

2. The gaming controller of claim 1, further comprising one or more control units (12), a light source (10), a connector for charging the power supply and optionally a strap (17) for attaching the gaming controller to the wrist of a gamer.

3. The gaming controller of any preceding claim, wherein the housing (2) comprises an upper control surface and a lower surface, wherein the lower surface being curved, in use the digits of a gamer curls around the curved lower surface to allow the gamer to firmly grasp and hold the housing (2) and control the orientation thereof, in use, the gamer's thumb digit extending in a suspended manner over the upper control surface, the housing curved lower surface optionally defining a depression therein positioned and dimensioned so as to accept a gamer digit, optionally the gamers trigger finger; and wherein the upper control surface comprise the display unit (6) and at least one control unit (12) is disposed on the upper control surface, enabling a gamer's thumb, in use, to be suspended at least in part over and able to descend down onto the control unit (12) so as to actuate and operate said control unit (12) while the gamer maintain a grip on the housing (2); and wherein said housing (2) can sense, at least in part, its own orientation.

4. The gaming controller of any preceding claim, wherein the housing (2) comprises a first upper shell element (2a), a second lower shell element (2b) fitted to tightly connect with the upper shell element (2a), and optionally a third lateral shell element (2c) fitted to tightly connect with the upper shell (2a) and optionally the lower shell (2b), said shells elements (2a, 2b, 2c) comprising one or more apertures (7) fitted for mounting the display and optionally the control units (12), said shell elements fitted together with one or more sealing elements (3) in between connections of shells (2a, 2b, 2c) and/or apertures (7) connecting the inside of the housing to the outside of the housing to form a container containing the electronic circuitry resistant to water and dirt.

5. The gaming controller of any preceding claim, wherein the housing (2) has a gripping portion (18) having an outer diameter/diagonal between 2 cm to 5 cm and a length between 13 cm to 20 cm.

6. The gaming controller of any preceding claim, wherein
a) the circuit board comprises a printed circuit board (PCB);
b) the power supply (11) comprises a fixed rechargeable battery, such as a Li-ion battery or LiPo battery or Nickel-Cadmium battery or Nickel Metal Hydride or a replaceable battery, such as an AA size or AAA size battery;
c) the data processing unit comprises a microprocessor, a microcontroller, an embedded processor, a Digital Signal Processor, a Media Processor and/or a graphics buffer;
d) the data storage unit comprises an embedded MultiMediaCard (eMMC) or a Random Access Memory chip; and
e) the wireless communication unit comprises a Bluetooth, optionally a Bluetooth Low Energy (BLE), radio transmitter and receiver.

7. The gaming controller of any preceding claim, wherein the display is rectangular, circular or ellipsoid, optionally pressure sensitive, LCD/TFT, LED or OLED display.

8. The gaming controller of any preceding claim, wherein the motion sensor is an Inertia Measuring Unit (IMU) comprising a 3-axis accelerometer, a 3-axis gyroscope and a 3-axis magnetometer, which optionally each can be in the same or separate integrated circuits or chips.

9. The gaming controller of any preceding claim, wherein the haptic signal generator is a vibration generator, optionally selected from voice coil actuators, eccentric rotating mass actuators, linear resonance actuators, surface transducer actuators, solenoid actuators and/or accelerated ram actuators.

10. The gaming controller of claim 2, wherein the one or more control units (12) comprises one or more of:
a) a single touch button;
b) a multiple button;
c) a capacitive touch button;
d) a full-hand squeeze button;
e) a joystick button;
f) a depressible button selected from a cross switch button, a push button or a wedge-shaped spring-loaded button.

11. The gaming controller of claim 2, wherein the light source (10) comprises a LED, a RGB LED capable of emitting multiple colors of visible light.

12. The gaming controller of any preceding claim, wherein electronic circuitry does not contain a speaker, a SIM card port, a camera, a GPS transmitter or a long-range wireless transmitter/receiver for cellular networks and/or mobile networks.

13. A gaming assembly (14) comprising the gaming controller (1) of any preceding claims and a mobile communication device (13), wherein the gaming controller (1) and the mobile communication device (13) are separate entities in proximity of less than 100 meters; and wherein the mobile communication device (13) is capable of receiving, processing and transmitting data to and from the gaming controller and to receiving and transmitting data to additional data processing devices via long range WiFi or cellular networks and/or mobile networks; and wherein optionally the mobile communication device (13) is a smartphone, tablet computer, or smart watch.

14. A computer-implemented method of providing sensory signals to a human gamer comprising:
a) providing one or more gaming assemblies (14) of claim 13;
b) Providing a movement or change of orientation or actuation of a control unit (12) of the gaming controller (1) generating a first set of data in the motion sensor;
c) transmitting the first set of data to the data processing unit in the gaming controller (1) and processing said data into a second set of data (16A) under the control of a first game software running on the gaming controller (1);
d) transmitting the second set of data (16A) from the data processing unit in the gaming controller (1) wirelessly to the mobile communication device (13) and processing the second set of data (16A) in the mobile communication device (13) to generate a third set of data under the control of a second game software running on the mobile communication device (13);
and comprising one or more of the following processes:
e) transmitting the third set of data (16B) from the mobile communication device (13), optionally via the data processing unit and/or the data storage unit, back to the display (6), the light source (10) and/or haptic signal generator (9) in the gaming controller (1) to produce a sensory impulse; and/or
f) transmitting the third set of data (16C) from the mobile communication device (13) wirelessly to a server unit (15) and processing said data into a fourth set of data under the control of a game software running on the server and transmitting the fourth data (16 E-H) set to further gaming assemblies, optionally triggering further data transmissions (16 I-L) between the gaming controllers (1) and mobile communication devices (13) of the further gaming assemblies and producing sensory impulses in the displays (6), the light sources (10) and/or haptic signal generators (9) in the further gaming controllers (1).

15. A gaming software running on the gaming controller (1) and/or the mobile communication device (13) in the gaming assembly of claim 13 or the server (15) of claim 14 producing a data signal which generates a sensory impulse/signal in the display (6), the light source (10) and/or the haptic impulse/signal generator (9) in the gaming controller (1).
